# EUROPÄISCHE PATENTSCHRIFT

(11) **EP 2 838 821 B1**
(45) Veröffentlichungstag und Bekanntmachung des Hinweises auf die Patenterteilung: **25.05.2016**
(21) Anmeldenummer: 13706465.5
(22) Anmeldetag: 19.02.2013
(51) Int. Cl.: B65G 54/02

(54) **TRANSPORTVORRICHTUNG MIT LINEARMOTORANTRIEB**
TRANSPORTING APPARATUS WITH LINEAR-MOTOR DRIVE
DISPOSITIF DE TRANSPORT AVEC ENTRAÎNEMENT PAR MOTEUR LINÉAIRE

(30) Priorität: 18.04.2012 DE 102012103378
(43) Veröffentlichungstag der Anmeldung: 25.02.2015
(73) Patentinhaber: Uhlmann Pac-Systeme GmbH & Co. KG, 88471 Laupheim (DE)
(72) Erfinder: AUMANN, Thomas, 88451 Dettingen (DE); RIEKENBRAUCK, Jörg, 88477 Schwendi (DE); KRAHL, Wolfgang, 88471 Laupheim (DE); LINKE, Roberto, 89231 Neu-Ulm (DE)
(74) Vertreter: Wächter, Jochen
(86) Internationale Anmeldenummer: PCT/EP2013/053258
(87) Internationale Veröffentlichungsnummer: WO 2013/156177

(56) Entgegenhaltungen:
- EP-A2- 0 517 684
- EP-A2- 0 577 995
- EP-A2- 2 042 759
- DE-A1-102010 028 055
- US-A- 4 867 579
- US-A- 4 884 898

## Beschreibung

Die vorliegende Erfindung betrifft eine Transportvorrichtung mit Linearmotorantrieb.

Derartige Transportvorrichtungen sind bereits seit längerem bekannt und liefern den Vorteil, dass die von dem Linearmotorantrieb bewegten Schlitten bzw. Förderelemente unabhängig voneinander bewegt werden können, was erhebliche Vorteile gegenüber konventionellen mechanischen Transportvorrichtungen bietet.

Ein Einsatzzweck derartiger Transportvorrichtungen liegt beispielsweise in der Produktbeschickung von Verpackungsmaschinen, wie etwa aus DE 10 2010 028 055 A1, US 6,876,896 B1 oder US 5,225,725 bekannt ist. Dabei werden jeweils mit Permanentmagneten ausgestattete bewegliche Förderelemente bzw. Schlitten entlang einer ortsfesten, umlaufend angeordneten Laufsschiene bewegt. Der Antrieb der Schlitten erfolgt mittels ortsfest angeordneter, aneinander gereihter Spulen, die einzeln bestromt werden, wodurch lokale Magnetfelder entstehen, die wiederum einen Kraftfluss zwischen den Spulen und den Permanentmagneten erzeugen. Durch intelligentes Bestromen der einzelnen Spulen kann ein "wanderndes" Magnetfeld erzeugt werden, welches jeden einzelnen Schlitten unabhängig von möglicherweise vorhandenen anderen Schlitten bewegen kann.

Da die Laufschiene als umlaufendes, geschlossenes Element ausgebildet ist, treten gerade im Bereich der Kurvenabschnitte der Laufschiene Probleme durch hohe Reib- und Trägheitskräfte der Führungsrollen auf der Laufschiene und durch das teilweise vorhandene Spiel der Führungsrollen gegenüber der Laufschiene auf.

Um hier eine Verbesserung zu erhalten, wurde in WO 2010/086060 A1 eine Transportvorrichtung vorgeschlagen, bei der jeder Schlitten mit mindestens vier Laufrollen ausgestattet ist, die für eine sichere, spielfreie Lagerung des Schlittens an der Laufschiene sorgen sollen. Hierbei sind die Drehachsen von drei Laufrollen senkrecht zu der durch die Bewegung des Schlittens definierten Ebene angeordnet, während sich die Drehachse der vierten Laufrolle parallel zu dieser Ebene erstreckt. Sämtliche Laufrollen laufen an Laufflächen ab, die in einer Innenausnehmung der Laufschiene ausgebildet sind. Diese Transportvorrichtung betrifft einen Bautyp, bei dem die Laufschiene um den Schlitten angeordnet ist.

Des Weiteren ist aus US 4,884,898 A ein Lagerblock in Form eines Schlittens mit drei Laufrollen bekannt. Der Schlitten wird entlang einer ortsfesten Laufschiene geführt. Die drei Laufrollen sind in einem Winkelabstand von 120° um eine runde Laufschienenstange angeordnet.

Aus US 4,867,579 A ist eine Gleitvorrichtung zum Betreiben von Maschinen bekannt, die einen Schlitten aufweist, der entlang einer Laufschiene geführt ist. Der Schlitten umfasst pro Seitenflanke ein Laufrollenpaar, wobei die Rollen an Laufflächen der Laufschiene abrollen. Die Laufflächen sind bezüglich einer Längsmittelebene symmetrisch angeordnet.

Der vorliegenden Erfindung liegt die Aufgabe zugrunde, eine Transportvorrichtung zur Förderung von Produkten zu schaffen, die leicht von außen zugänglich ist, möglichst einfach aufgebaut ist und eine sichere Führung des Schlittens entlang der umlaufend angeordneten Laufschiene bei Antrieb durch die Linearmotor-Antriebsvorrichtung gewährleistet.

Diese Aufgabe wird durch die Merkmale des Anspruchs 1 gelöst.

Erfindungsgemäß umfasst die Transportvorrichtung zur Förderung von Produkten mindestens einen bewegbaren Schlitten zum Fördern eines Produkts, eine ortsfeste, umlaufend angeordnete Laufschiene zur Führung des mindestens einen Schlittens, und eine Linearmotor-Antriebsvorrichtung zum Antrieb des mindestens einen Schlittens. Dabei weist der mindestens eine Schlitten mindestens zwei Permanentmagneten auf, die mit der Linearmotor-Antriebsvorrichtung in Wirkverbindung stehen. Außerdem weist der mindestens eine Schlitten eine Mehrzahl von Laufrollen auf, die an in verschiedenen Ebenen angeordneten Laufflächen der Laufschiene anliegen und bei Bewegung des mindestens einen Schlittens auf den Laufflächen abrollen. Der Schlitten und die Laufschiene sind dabei symmetrisch bezüglich einer Längsmittelebene der Transportvorrichtung, und der Schlitten weist zwei an dieser Längsmittelebene gespiegelte Schlittenhälften auf, von denen jede drei Laufrollen aufweist, wobei die drei Laufrollen der ersten Schlittenhälfte auf zwei Laufflächen an einer ersten Seitenflanke der Laufschiene und die drei Laufrollen der zweiten Schlittenhälfte auf zwei Laufflächen an einer zweiten Seitenflanke der Laufschiene anliegen. Die erste und die zweite Lauffläche jeder Seitenflanke der Laufschiene sind unter einem spitzen Winkel zur Längsmittelebene angeordnet, und die zwei Laufflächen jeder Seitenflanke schließen miteinander einen Winkel von 80° bis 100° ein. Der spitze Winkel zwischen jeder Lauffläche und der Längsmittelebene beträgt 40° bis 50° und die beiden Laufflächen jeder Seitenflanke der Laufschiene sind voneinander beabstandet und einander zugewandt. Weiterhin weist der Schlitten einen im Wesentlichen hufeisenförmigen oder umgekehrt U-förmigen Grundkörper auf, von dessen Schenkeln die Laufrollen nach innen abragen.

Mit dieser Anordnung wird eine steife Lagerung des Schlittens entlang der Laufschiene möglich, wobei gleichzeitig der Austausch jedes Schlittens und dessen Wartung besonders einfach möglich ist.

Vorzugsweise sind die drei Laufrollen jeder Schlittenhälfte in einer verkippten Dreiecksanordnung angeordnet, wobei zwei Laufrollen parallele Drehachsen aufweisen und auf der ersten Lauffläche anliegen, und wobei die dritte Laufrolle eine unter einem Winkel von 80° bis 100° zu den Drehachsen der ersten beiden Laufrollen gekippte Drehachse aufweist und auf der zweiten Lauffläche anliegt.

Von besonderem Vorteil ist es, wenn die zwei Laufflächen jeder Seitenflanke miteinander einen Winkel von im Wesentlichen 90° einschließen. Ebenso sollte der spitze Winkel zwischen jeder Lauffläche und der Längsmittelebene im Wesentlichen 45° betragen. Mit dieser Ausgestaltung lässt sich in den meisten erdenklichen Fahrsituationen eine sichere Führung des Schlittens erzielen.

In einer besonders bevorzugten Ausgestaltung der erfindungsgemäßen Transportvorrichtung ist die dritte Laufrolle jeder Schlittenhälfte bezüglich einer Längsrichtung der Transportvorrichtung genau in der Mitte zwischen den beiden anderen Laufrollen angeordnet.

Die Permanentmagnete sind vorzugsweise in Richtung eines Endes der Schenkel an deren Innenseite angeordnet.

Zur spielfreien Lagerung des Schlittens trägt auch bei, wenn die Schenkel des Grundkörpers in ihrem Mittelbereich eine U-förmige Ausnehmung zur Bildung eines Stegs aufweisen, an dem die dritte Laufrolle gelagert ist. Dieser Steg ist aufgrund seiner Materialeigenschaften geringfügig biegsam. Der Steg ist derart ausgestaltet und angeordnet, dass die dritte Laufrolle in der Arbeitsstellung des Schlittens leicht gegen die zweite Lauffläche gedrückt wird, wobei der Steg leicht nach außen gebogen wird.

Weitere Eigenschaften und Vorteile der vorliegenden Erfindung ergeben sich aus der nachfolgenden Beschreibung unter Bezugnahme auf die Zeichnungen.
- Fig. 1: ist eine schematische Seitenansicht eines Ausführungsbeispiels einer erfindungsgemäßen Transportvorrichtung mit einer umlaufenden Laufschiene und einem daran gelagerten und entlang der Laufschiene bewegbaren Schlitten;
- Fig. 2: ist eine vergrößerte Perspektivansicht eines Kurvenabschnitts der Transportvorrichtung aus Fig. 1;
- Fig. 3: ist eine schematische Perspektivansicht eines geradlinigen Abschnitts der Transportvorrichtung aus Fig. 1;
- Fig. 4: ist eine schematische Perspektivansicht des an der Laufschiene gelagerten Schlittens aus Fig. 1;
- Fig. 5: ist eine Perspektivansicht des Schlittens aus Fig. 4 mit einem durchsichtig dargestellten Grundkörper; und
- Fig. 6: ist eine Perspektivansicht des Schlittens aus Fig. 4 mit einem teilweise abgebrochen dargestellten Grundkörper.

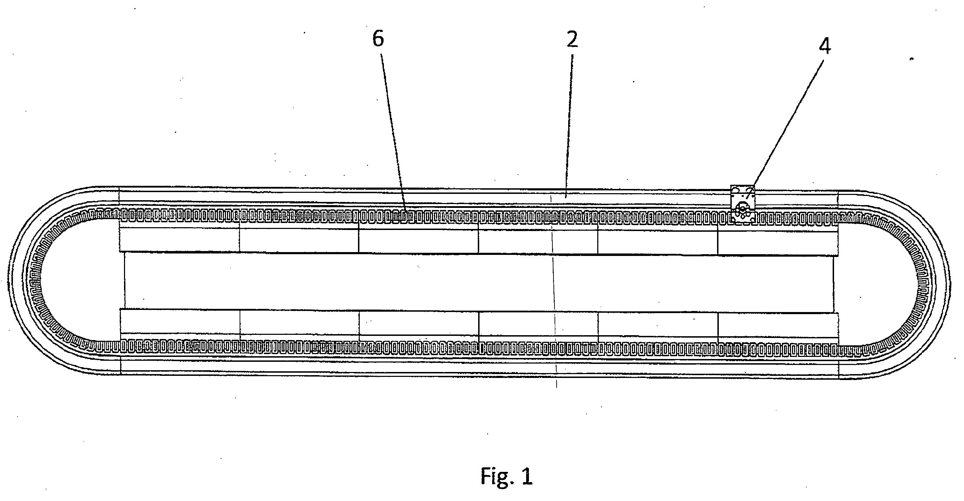

Fig. 1 zeigt eine Möglichkeit des grundsätzlichen Aufbaus einer erfindungsgemäßen Transportvorrichtung zur Förderung von Produkten. Die Transportvorrichtung umfasst eine ortsfeste, umlaufend angeordnete Laufschiene 2 zur Führung mindestens eines bewegbaren Schlittens 4, der zum Fördern eines Produkts dient und entlang der Laufschiene 2 bewegt wird. Auch wenn im dargestellten Beispielsfall lediglich ein Schlitten 4 vorhanden ist, werden in der Regel mehrere Schlitten 4 gleichzeitig auf der derselben Laufschiene 2 verfahren. Das Material der Laufschiene 2 und des Schlittens 4 ist vorzugsweise Aluminium.

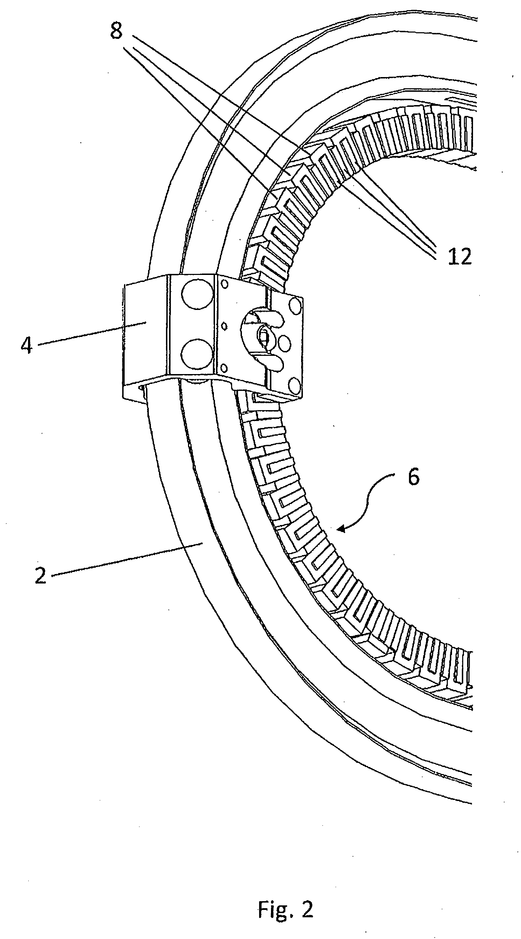

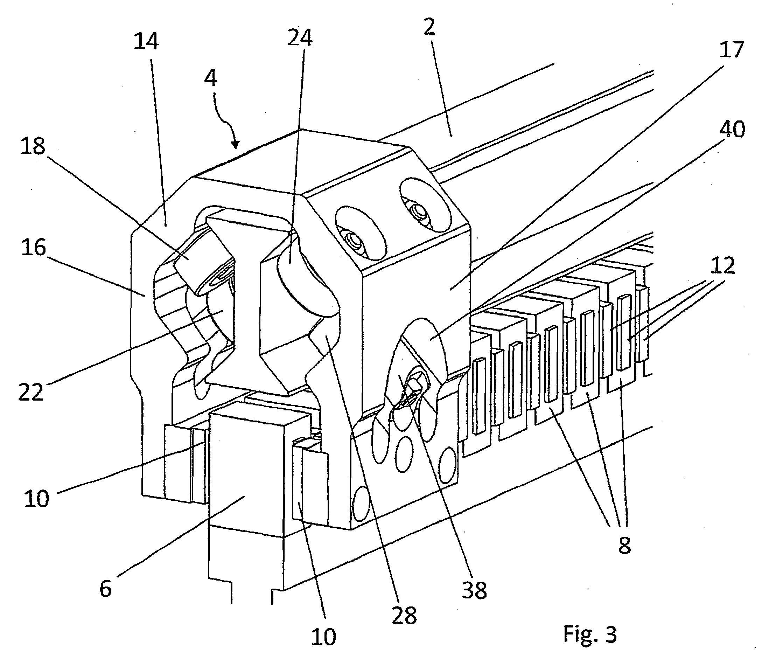

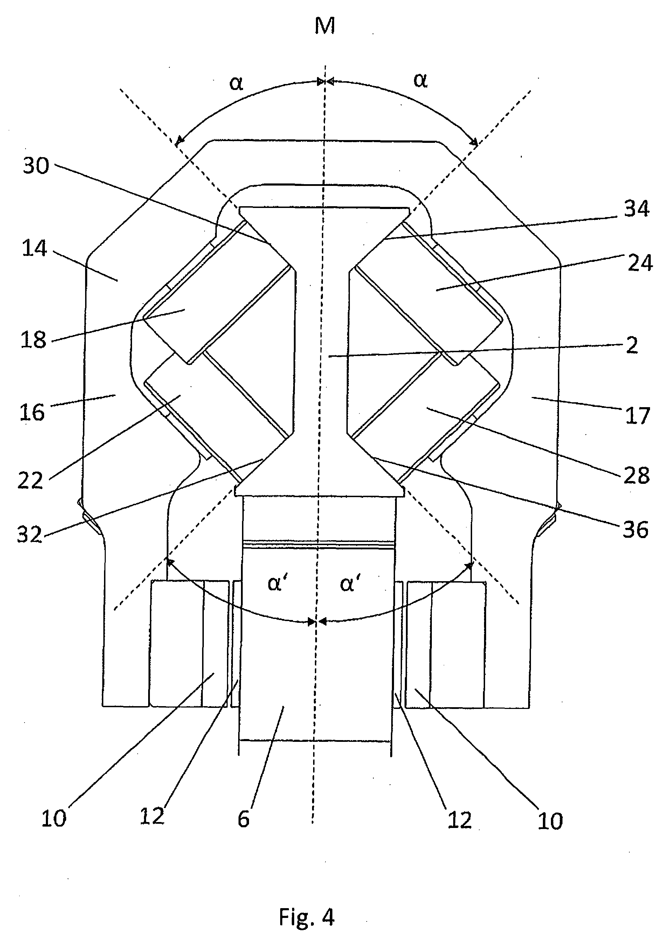

Zum Antrieb des mindestens einen Schlittens 4 dient eine Linearmotor-Antriebsvorrichtung 6, welche üblicherweise als Motorspulenpaket ausgebildet ist. Die Linearmotor-Antriebsvorrichtung 6 umfasst viele aneinander gereihte Spulen 8 (siehe Fig. 2), vorzugsweise aus Kupfer, die einzeln bestromt werden können. Der Schlitten 4 Weist wiederum, wie aus Fig. 3 und 4 ersichtlich ist, mindestens zwei Permanentmagnete 10 auf, die mit der Linearmotor-Antriebsvorrichtung 6 in Wirkverbindung stehen. Die Lagerung und Führung des Schlittens 4 entlang der Laufschiene 2 erfolgt über eine Mehrzahl von Laufrollen, auf die weiter unten näher eingegangen wird. Diese Laufrollen sind vorzugsweise aus Kunststoff gebildet.

Bei Bestromung einer Spule 8 entstehen lokale Magnetfelder und somit ein Kraftfluss zwischen der Spule 8 und dem Permanentmagneten 10. Durch intelligentes Ansteuern und Bestromen der einzelnen Spulen 8 kann ein "wanderndes" Magnetfeld erzeugt werden, welches jeden einzelnen Schlitten 4 unabhängig von den anderen Schlitten 4 bewegen kann. Aufgrund der beidseitig neben der Linearmotor-Antriebsvorrichtung 6 angeordneten Permanentmagnete 10 wird die direkte Kraftwirkung zwischen jeder Spule 8 und den Permanentmagneten 10 theoretisch neutralisiert und es verbleibt lediglich eine Antriebskraft, welche auf den Schlitten 4 wirkt.

Die größte Anziehungskraft besteht zwischen den Permanentmagneten 10 und den Statorzähnen 12 zwischen den Spulen 8. Die eisenhaltigen Statorzähne 12 haben die Funktion, die Magnetfelddichte zu erhöhen. Theoretisch könnte die Linearmotor-Antriebsvorrichtung 6 auch eisenlos gebaut werden, allerdings verringert sich dadurch die erreichbare Antriebskraft.

Wie aus Fig. 1 bis 4 deutlich wird, liegt im dargestellten Beispielsfall die Linearmotor-Antriebsvorrichtung 6 innerhalb der von der Laufschiene 2 definierten ovalen Form und weist eine ebensolche ovale Form auf.

Jeder Schlitten 4 kann demnach sowohl eine geradlinige Bewegung als auch eine Kurvenbewegung ausführen. Durch eine Kombination von Gerade und Kurven können neben der in Fig. 1 dargestellten ovalen Bahnform der Laufschiene 2 beliebige Bahnformen realisiert werden. Es sind hier viele andere Ausgestaltungen möglich.

Allerdings ist die dargestellte Bahnform insoweit vorteilhaft, als in den Kurven eine abgewandelte Klothoidenbewegung erfolgt. Die Kurvenbahn ist krümmungsstetig und auch die erste und zweite Ableitung der Krümmung ist stetig. Auf diese Weise wird die sprunghafte Änderung der Winkelgeschwindigkeit und der Fliehkraft in Kurveneingang und -ausgang vermieden. Dies führt zu einer Erhöhung der Lebensdauer der Laufrollen, und die Schwingungen auf das Gesamtsystem werden reduziert.

Aufgrund des symmetrischen Aufbaus von Schlitten 4 und Laufschiene 2 bezüglich einer Längsmittelebene M (Fig. 4) der Transportvorrichtung sollte, wie oben bereits erwähnt, die direkte Kraftwirkung jeder Spule 8 auf die Permanentmagneten 10 neutralisiert werden. Verringert sich allerdings der Spalt zwischen Spule 8 und Permanentmagneten 10 auf einer Seite, würde eine direkte Kraftkomponente zwischen der Spule 8 und dem Permanentmagneten 10 entstehen. Aufgrund von Fertigungstoleranzen und dynamischen Verformungen muss davon ausgegangen werden, dass die Breite des Spaltes variiert und somit Querkräfte auf den Schlitten 4 wirken. Deshalb muss der Schlitten 4 robust gelagert werden, um den Spalt zwischen Spule 8 und Permanentmagneten 10 auf beiden Seiten möglichst konstant halten zu können.

Diese robuste Lagerung wird im Folgenden unter Bezugnahme auf Fig. 3 bis 6 näher beschrieben. Der Schlitten 4 weist einen im Wesentlichen hufeisenförmigen oder umgekehrt U-förmigen Grundkörper 14 auf, von dessen Schenkeln 16, 17 Laufrollen 18, 20, 22, 24, 26, 28 nach innen abragen. Die mindestens zwei Permanentmagnete 10 sind dabei an den Enden der Schenkel 16, 17 an deren Innenseite angeordnet und umgeben die Linearmotor-Antriebsvorrichtung 6 planparallel von beiden Seiten. Vorzugsweise sind mehrere Permanentmagnete 10 auf beiden Seiten des Schlittens 4 vorgesehen.

Die sechs Laufrollen 18, 20, 22, 24, 26, 28 liegen auf insgesamt vier Laufflächen 30, 32, 34, 36 der Laufschiene 2 an und rollen auf diesen bei Bewegung des Schlittens 4 ab. Die von der Längsmittelebene M betrachtet linke Schlittenhälfte in Fig. 4 weist demnach drei Laufrollen 18, 20, 22 auf, wobei die ersten beiden Laufrollen 18, 20 auf der ersten Lauffläche 30 und die dritte Laufrolle 22 auf der zweiten Lauffläche 32 anliegen. Ebenso weist die von der Längsmittelebene M betrachtet rechte Schlittenhälfte drei Laufrollen 24, 26, 28 auf, von denen die beiden ersten Laufrollen 24, 26 auf einer ersten Lauffläche 34 und die dritte Laufrolle 28 auf einer zweiten Lauffläche 36 anliegen.

Jede Lauffläche 30, 32, 34, 36 jeder Seitenflanke ist dabei unter einem spitzen Winkel α, α' zur Längsmittelebene M angeordnet, so dass die zwei Laufflächen 30, 32 bzw. 34, 36 jeder Seitenflanke miteinander einen Winkel von 80° bis 100° einschließen. Vorzugsweise beträgt der spitze Winkel α, α' zwischen jeder Lauffläche 30, 32, 34, 36 und der Längsmittelebene M 40° bis 50°, besonders bevorzugt im Wesentlichen 45°. Dementsprechend ist es auch vorteilhaft, wenn die zwei Laufflächen 30, 32 bzw. 34, 36 jeder Seitenflanke miteinander einen Winkel von im Wesentlichen 90° einschließen.

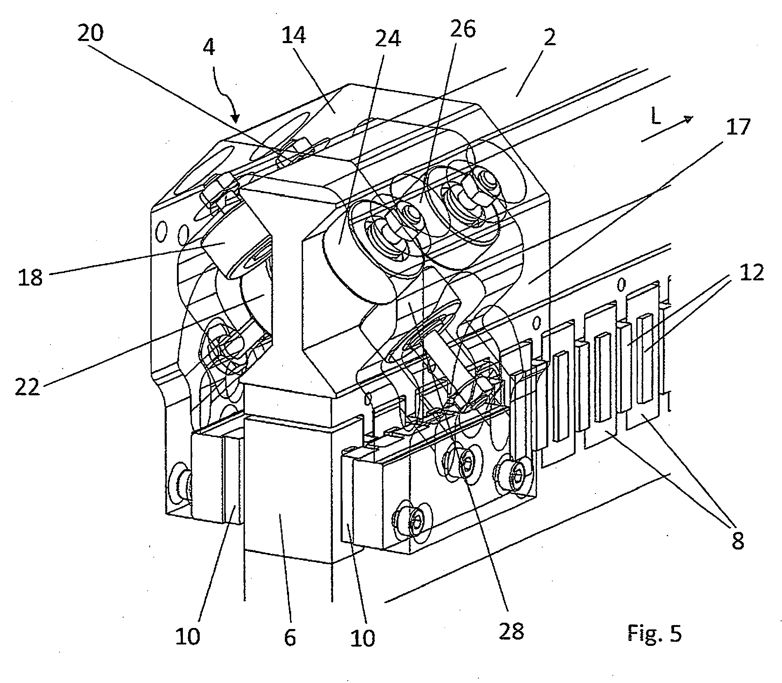

Die drei Laufrollen 18, 20, 22 bzw. 24, 26, 28 jeder Schlittenhälfte sind also schräg angeordnet. Genauer gesagt sind sie in einer verkippten Dreiecksanordnung angeordnet, wobei die beiden ersten Laufrollen 18, 20 bzw. 24, 26 parallele Drehachsen aufweisen, während die dritte Laufrolle 22 bzw. 28 eine unter einem Winkel von 80° bis 100°, besonders bevorzugt im Wesentlichen 90°, zu den Drehachsen der ersten beiden Laufrollen 18, 20 bzw. 24, 26 gekippte Drehachse aufweist. Wie insbesondere aus Fig. 5 ersichtlich ist, ist dabei die dritte Laufrolle 22 bzw. 28 jeder Schlittenhälfte bezüglich der Längsrichtung (Pfeil L) der Transportvorrichtung genau in der Mitte zwischen den beiden anderen Laufrollen 18, 20 bzw. 24, 26 angeordnet, so dass sich eine gleichschenklige, möglicherweise sogar gleichwinklige Dreiecksanordnung ergibt.

Wie am besten aus Fig. 4 hervorgeht, sind die beiden Laufflächen 30, 32 bzw. 34, 36 jeder Seitenflanke der Laufschiene 2 voneinander beabstandet und einander zugewandt. Die Laufschiene 2 besitzt somit ein Doppel-T-Profil mit abgeschrägten Laufflächen 30, 32, 34, 36 an den Außenwänden der T-Balken.

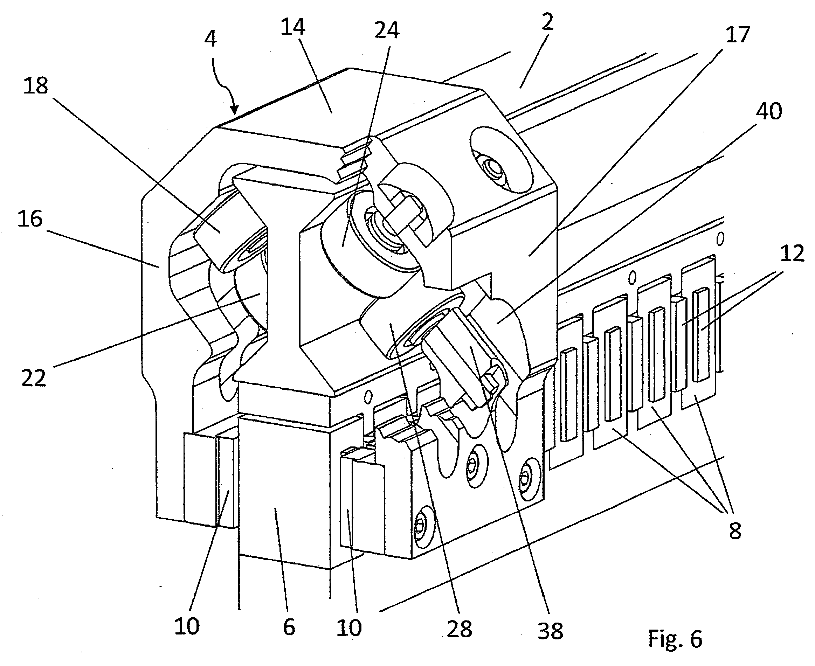

Wie schließlich am besten aus Fig. 3 und 6 ersichtlich ist, sind die beiden ersten Laufrollen 18, 20 bzw. 24, 26 jeder Schlittenhälfte drehbar am Grundkörper 14 des Schlittens 4 gelagert. Hingegen ist die dritte Laufrolle 22, 28 jeder Schlittenhälfte drehbar an einem Steg 38 gelagert, der von einer umgekehrt U-förmigen Ausnehmung 40 umgeben ist, welche in einem Mittelbereich der Schenkel 16, 17 des Grundkörpers 14 ausgebildet ist.

Diese Anordnung dient einer federnden Lagerung der dritten Laufrollen 22, 28. Die Federung wird hierbei über eine bewusste Schwächung der Schenkel 16, 17 realisiert. Die Federkonstante ändert sich mit der Größe und der Form der Ausnehmung 40 um die Stege 38. Die Ausnehmung 40 ist demnach entsprechend der gewünschten Federkonstante zu dimensionieren. Im vorliegenden Beispielsfall wurde die Drehachse der dritten Laufrollen 22, 28 im entspannten Zustand nach innen geneigt, damit die dritten Laufrollen 22, 28 in der auf die Laufschiene 2 gesetzten Position des Schlittens 4, in der sie senkrecht zur jeweiligen zweiten Lauffläche 32, 36 stehen, einen vorgespannten Zustand einnehmen und somit leicht gegen diese Lauffläche 32, 36 gedrückt werden. Dadurch gelingt es, alle Laufrollen 18, 20, 22, 24, 26, 28 stets spielfrei zu halten.

Die Erzeugung der Vorspannung erhält man durch gezielte Ausnutzung der Bauteilsteifigkeit. Es werden somit keine zusätzlichen Teile wie Federn benötigt und es ist kein Einstellen der Laufrollen erforderlich.

## Patentansprüche

1. Transportvorrichtung zur Förderung von Produkten, mit
mindestens einem bewegbaren Schlitten (4) zum Fördern eines Produkts;
einer ortsfesten, umlaufend angeordneten Laufschiene (2) zur Führung des mindestens einen Schlittens (4); und
einer Linearmotor-Antriebsvorrichtung (6) zum Antrieb des mindestens einen Schlittens (4);
wobei der mindestens eine Schlitten (4) mindestens zwei Permanentmagneten (10) aufweist, die mit der Linearmotor-Antriebsvorrichtung (6) in Wirkverbindung stehen, und
wobei der mindestens eine Schlitten (4) außerdem eine Mehrzahl von Laufrollen (18, 20, 22, 24, 26, 28) aufweist, die an in verschiedenen Ebenen angeordneten Laufflächen (30, 32, 34, 36) der Laufschiene (2) anliegen und bei Bewegung des mindestens einen Schlittens (4) auf den Laufflächen (30, 32, 34, 36) abrollen;
wobei der Schlitten (4) zwei an der Längsmittelebene (M) gespiegelte Schlittenhälften aufweist, von denen jede drei Laufrollen (18, 20, 22; 24, 26, 28) aufweist, wobei die drei Laufrollen (18, 20, 22) der ersten Schlittenhälfte auf zwei Laufflächen (30, 32) an einer ersten Seitenflanke der Laufschiene (2) und die drei Laufrollen (24, 26, 28) der zweiten Schlittenhälfte auf zwei Laufflächen (34, 36) an einer zweiten Seitenflanke der Laufschiene (2) anliegen;
wobei die zwei Laufflächen (30, 32; 34, 36) jeder Seitenflanke miteinander einen Winkel von 80° bis 100° einschließen, wobei die beiden Laufflächen (30, 32; 34, 36) jeder Seitenflanke der Laufschiene (2) voneinander beabstandet sind und einander zugewandt sind; und
wobei der Schlitten (4) einen im Wesentlichen hufeisenförmigen oder umgekehrt U-förmigen Grundkörper (14) aufweist, von dessen Schenkeln (16, 17) die Laufrollen (18, 20, 22; 24, 26, 28) nach innen abragen;
**dadurch gekennzeichnet, dass**
der Schlitten (4) und die Laufschiene (2) symmetrisch bezüglich einer Längsmittelebene (M) sind; und
die erste Lauffläche (30; 34) und die zweite Lauffläche (32; 36) jeder Seitenflanke der Laufschiene (2) unter einem spitzen Winkel (*α*, *α*') zur Längsmittelebene (M) angeordnet ist, wobei der spitze Winkel (*α*, *α'*) zwischen jeder Lauffläche (30, 32, 34, 36) und der Längsmittelebene (M) 40° bis 50° beträgt.

2. Transportvorrichtung nach Anspruch 1, **dadurch gekennzeichnet, dass** die drei Laufrollen (18, 20, 22; 24, 26, 28) jeder Schlittenhälfte in einer verkippten Dreiecksanordnung angeordnet sind, wobei zwei Laufrollen (18, 20; 24, 26) parallele Drehachsen aufweisen und auf der ersten Lauffläche (30; 34) anliegen, und wobei die dritte Laufrolle (22; 28) eine unter einem Winkel von 80° bis 100° zu den Drehachsen der ersten beiden Laufrollen (18, 20; 24, 26) gekippte Drehachse aufweist und auf der zweiten Lauffläche (32; 36) anliegt.

3. Transportvorrichtung nach einem der vorangehenden Ansprüche, **dadurch gekennzeichnet, dass** die zwei Laufflächen (30, 32; 34, 36) jeder Seitenflanke miteinander einen Winkel von im Wesentlichen 90° einschließen.

4. Transportvorrichtung nach Anspruch 3, **dadurch gekennzeichnet, dass** der spitze Winkel (*α*, *α*') zwischen jeder Lauffläche (30, 32, 34, 36) und der Längsmittelebene (M) im Wesentlichen 45° beträgt.

5. Transportvorrichtung nach einem der vorangehenden Ansprüche, **dadurch gekennzeichnet, dass** die dritte Laufrolle (22; 28) jeder Schlittenhälfte bezüglich der Längsrichtung (L) genau in der Mitte zwischen den beiden anderen Laufrollen (18, 20; 24, 26) angeordnet ist.

6. Transportvorrichtung nach Anspruch 1, **dadurch gekennzeichnet, dass** die mindestens zwei Permanentmagnete (10) in Richtung eines Endes der Schenkel (16, 17) an deren Innenseite angeordnet sind.

7. Transportvorrichtung nach Anspruch 1 oder 6, **dadurch gekennzeichnet, dass** die beiden ersten Laufrollen (18, 20; 24, 26) jeder Schlittenhälfte drehbar am Grundkörper (14) des Schlittens (4) gelagert sind, und dass die Schenkel (16, 17) des Grundkörpers (14) in ihrem Mittelbereich eine U-förmige Ausnehmung (40) zur Bildung eines Stegs (38) aufweisen, an dem die jeweilige dritte Laufrolle (22; 28) gelagert ist.

## Claims

1. Transporting apparatus for conveying products, with
at least one movable slide carriage (4) for conveying a product;
a locally fixed, circumferentially arranged running track (2) for guiding the at least one slide carriage (4); and
a linear motor drive apparatus (6) for driving the at least one slide carriage (4); wherein the at least one slide carriage (4) has at least two permanent magnets (10) which are in active connection with the linear motor drive apparatus (6), and
wherein the at least one slide carriage (4) furthermore has a plurality of runners (18, 20, 22, 24, 26, 28) which bear against running faces (30, 32. 34, 36) arranged at different levels on the running track (2), and roll along on the running faces (30, 32, 34, 36) as the at least one slide carriage (4) is moved; wherein the slide carriage (4) has two carriage halves arranged in mirror image to the longitudinal central plane (M) and each of which has three runners (18, 20, 22; 24, 26, 28) wherein the three runners (18, 20, 22) of the first carriage half bear on two running faces (30, 32) on a first lateral side of the running track (2), and the three runners (24, 26, 28) of the second carriage half bear on two running faces (34, 36) on a second lateral side of the running track (2);
wherein the two running faces (30, 32; 34, 36) of each lateral side include an angle of 80° to 100° with one another, wherein the two running faces (30, 32; 34, 36) of each lateral side of the running track (2) are spaced from one another and face one another; and
wherein the slide carriage (4) has a substantially horseshoe-shaped or inverted U-shaped base body (14), from the arms (16, 17) of which the runners (18, 20, 22; 24, 26, 28) project inwards;
**characterised in that** the slide carriage (4) and the running track (2) are symmetrical relative to a longitudinal central plane (M); and
the first running face (30; 34) and the second running face (32; 36) of each lateral side of the running track (2) are each arranged at an acute angle (α, α') to the longitudinal central plane (M), wherein the acute angle (α,α') between each running face (30, 32, 34, 36) and the longitudinal central plane (M) amounts to 40° to 50°.

2. Transporting apparatus according to claim 1 **characterised in that** the three runners (18, 20, 22; 24, 26, 28) of each carriage half are arranged in a tilted triangular arrangement wherein two runners (18, 20; 24, 26) have parallel axes of rotation and bear on the first running face (30; 34), and wherein the third runner (22; 28) has an axis of rotation which is tiled by an angle of 80° to 100_{°} to the axes of rotation of the first two runners (18, 20; 24, 26), and bears on the second running face (32; 36).

3. Transporting apparatus according to one of the preceding claims, **characterised in that** the two running faces (30, 32; 34, 36) of each lateral side include an angle of substantially 90° with one another.

4. Transporting apparatus according to claim 3 **characterised in that** the acute angle (α,α') between each running face (30, 32; 34, 36) and the longitudinal central plane (M) amounts to substantially 45°.

5. Transporting apparatus according to one of the preceding claims **characterised in that** the third runner (22; 28) of each carriage half is arranged with regard to the longitudinal direction (L) exactly in the middle between the two other runners (18, 20; 24, 26).

6. Transporting apparatus according to claim 1, **characterised in that** the at least two permanent magnets (10) are arranged towards one end of the arms (16, 17) on the insides thereof.

7. Transporting apparatus according to claim 1 or 6 **characterised in that** the two first runners (18, 20; 24, 26) of each carriage half are mounted rotatably on the base body (14) of the carriage (4), and that the arms (16, 17) of the base body (14) have in their central region a U-shaped recess (40) for forming a web (38) on which the respective third runner (22; 28) is mounted.

## Revendications

1. Dispositif de transport pour le transport de produits avec
au moins un chariot mobile (4) pour le transport d'un produit ;
un rail de roulement (2) fixe, agencé sur la périphérie pour le guidage de l'au moins un chariot (4) ; et
un dispositif d'entraînement à moteur linéaire (6) pour l'entraînement d'au moins un chariot (4) ;
l'au moins un chariot (4) présentant au moins deux aimants permanents (10) qui sont en liaison active avec le dispositif d'entraînement à moteur linéaire (6), et
l'au moins un chariot (4) présentant en outre une pluralité de roulettes (18, 20, 22, 24, 26, 28) qui reposent sur des surfaces de roulement (30, 32, 34, 36) du rail de roulement (2) agencées dans différents plans et roulent lors du mouvement de l'au moins un chariot (4) sur les surfaces de roulement (30, 32, 34, 36) ;
le chariot (4) présentant deux moitiés de chariot symétriques par rapport au plan médian longitudinal (M), dont chacune présente trois roulettes (18, 20, 24 ; 24, 26, 28), les trois roulettes (18, 20, 22) de la première moitié de chariot reposant sur deux surfaces de roulement (30, 32) contre un premier flanc latéral du rail de roulement (2) et les trois roulettes (24, 26, 28) de la seconde moitié de chariot reposant sur deux surfaces de roulement (34, 36) contre un second flanc latéral du rail de roulement (2) ;
les deux surfaces de roulement (30, 32 ; 34, 36) de chaque flanc latéral formant entre elles un angle de 80° à 100°, les deux surfaces de roulement (30, 32 ; 34, 36) de chaque flanc latéral du rail de roulement (2) étant espacées l'une de l'autre et étant tournées l'une vers l'autre ; et
le chariot (4) présentant un corps de base (14) sensiblement en forme de fer à cheval ou inversement en forme de U, des branches (16, 17) duquel les roulettes (18, 20, 22 ; 24, 26, 28) dépassent vers l'intérieur ;
**caractérisé en ce que**
le chariot (4) et le rail de roulement (2) sont symétriques par rapport à un plan médian longitudinal (M) ; et
la première surface de roulement (30 ; 34) et la seconde surface de roulement (32 ; 36) de chaque flanc latéral du rail de roulement (2) sont agencées selon un angle aigu (α,α') par rapport au plan médian longitudinal (M), l'angle aigu (α,α') entre chaque surface de roulement (30, 32, 34, 36) et le plan médian longitudinal (M) étant compris entre 40° et 50°.

2. Dispositif de transport selon la revendication 1, **caractérisé en ce que** les trois roulettes (18, 20, 22 ; 24, 26, 28) de chaque moitié de chariot sont agencées dans un agencement triangulaire incliné, deux roulettes (18, 20 ; 24, 26) présentant des axes de rotation parallèles et reposant sur la première surface de roulement (30 ; 34), et la troisième roulette (22 ; 28) présentant un axe de rotation incliné selon un angle de 80° à 100° par rapport aux axes de rotation des deux premières roulettes (18, 20 ; 24, 26) et reposant sur la seconde surface de roulement (32 ; 36).

3. Dispositif de transport selon l'une quelconque des revendications précédentes, **caractérisé en ce que** les deux surfaces de roulement (30, 32 ; 34, 36) de chaque flanc latéral forment entre elles un angle de sensiblement 90°.

4. Dispositif de transport selon la revendication 3, **caractérisé en ce que** l'angle aigu (α, α') entre chaque surface de roulement (30, 32, 34, 36) et le plan médian longitudinal (M) s'élève sensiblement à 45°.

5. Dispositif de transport selon l'une quelconque des revendications précédentes, **caractérisé en ce que** la troisième roulette (22 ; 28) de chaque moitié de chariot est agencée par rapport au sens longitudinal (L) précisément au milieu entre les deux autres roulettes (18, 20 ; 24, 26).

6. Dispositif de transport selon la revendication 1, **caractérisé en ce que** les au moins deux aimants permanents (10) sont agencés en direction d'une extrémité des branches (16, 17) sur leur côté intérieur.

7. Dispositif de transport selon la revendication 1 ou 6, **caractérisé en ce que** les deux premières roulettes (18, 20 ; 24, 26) de chaque moitié de chariot sont logées de manière rotative sur le corps de base (14) du chariot (4) et **en ce que** les branches (16, 17) du corps de base (14) présentent dans leur zone médiane un évidement en U (40) pour la formation d'une traverse (38), sur laquelle est logée la troisième roulette (22 ; 28) respective.
